# EUROPEAN PATENT APPLICATION

(11) **EP 3 617 279 A1**
(43) Date of publication of application: **04.03.2020**
(21) Application number: 17906911.7
(22) Date of filing: 28.11.2017
(51) Int. Cl.: C09D 7/40

(54) **BRIDGE DECK WATERPROOFING APPARATUS, WATERPROOF COATING METHOD, WATERPROOF COATING MATERIAL APPLIED BY BRIDGE DECK WATERPROOFING APPARATUS, AND COATING LAYER COMPRISING SAME WATERPROOF COATING MATERIAL**

(30) Priority: 25.04.2017 KR 20170052759
(71) Applicant: Lim, Sang Su, Goyang-si, Gyeonggi-do 10533 (KR)
(72) Inventor: Lim, Sang Su, Goyang-si, Gyeonggi-do 10533 (KR)
(74) Representative: Müller Schupfner & Partner Patent- und Rechtsanwaltspartnerschaft mbB
(86) International application number: PCT/KR2017/013729
(87) International publication number: WO 2018/199416

(57) **Abstract**

Disclosed are an apparatus for applying a waterproof coating material, a waterproof coating material applied by the apparatus for applying the waterproof coating material, and a coating layer. More particularly, the apparatus for applying a waterproof coating material comprises: a cooker (200) which is seated on a driving vehicle or on a trailer (100) towed by the driving vehicle at the rear of the driving vehicle, melts a solid waterproof coating material (30) into a gel phase and stores the gel phase coating waterproofing material therein, and is provided with a discharge duct (210) for discharging the gel phase waterproof coating material to a work surface; a pair of support frames (300) supported by hydraulic cylinders (310) so as to be moved up and down on both sides of the rear of the trailer (100); a spreading unit (400) which is installed around the free ends (311) of the support frames (300) and spreads the waterproof coating material (30), which is discharged through the discharge duct (210) of the cooker (200), to the right and left in accordance with a road width; and a scraper (500) which is installed at the free ends of the support frames (300) at the rear of the spreading unit (400) and scrapes the waterproof coating material (30) spread by the spreading unit (400) so as to apply the waterproof coating material (30) in a uniform thickness.

## Description

The present invention relates to a bridge deck waterproofing apparatus, a waterproof coating method, a waterproof coating material applied by the bridge deck waterproofing apparatus, and a coating layer including the same.

More particularly, the present disclosure relates to a bridge deck waterproofing apparatus capable of automatically performing a series of tasks including spreading an automatically-supplied waterproof coating material in accordance with a road width and scraping the spread waterproof coating material in a uniform thickness, a waterproof coating method using the same, a waterproof coating material applied by the bridge deck waterproofing apparatus, and a coating layer including the waterproof coating material.

Generally, a method of constructing or repairing a concrete pavement layer or an asphalt pavement layer paved on a bridge or the like includes paving a concrete slab, which is deposited as a frame structure of a bridge deck, with a waterproof layer and then constructing a concrete pavement layer or an asphalt pavement layer thereon which becomes a road surface.

Particularly, since corrosion of reinforcing bars of a concrete slab constituting a frame of a bridge deck is accelerated due to reasons such as generation of cracks in the bridge deck of the bridge due to physical and chemical deteriorations caused by infiltration of rainwater and load of vehicles, which causes moisture such as rainwater to infiltrate through the cracks and reach the concrete slab, and deterioration and infiltration of chloride of deicing chemicals due to repetition of a temperature rise in the summer and freezing and thawing actions in the winter, not only the durability and service life of the bridge are decreased, but also there is a problem in terms of safety.

Also, a method of repairing the asphalt pavement layer is a method in which a waterproof layer is constructed on a concrete slab deteriorated by a severe alkali aggregate reaction using asphalt waterproof coating, mastic asphalt, a resin-based waterproofing method or the like and then the waterproof layer is paved with asphalt. The method has a disadvantage in that, due to poor adhesion, poor waterproofing, reflection cracking or the like between the concrete slab and the asphalt pavement layer, rainwater or the like infiltrates through the concrete slab and causes deterioration again eventually.

Thus, a bridge deck waterproofing method capable of improving adhesion and binding power between a concrete slab and asphalt while preventing infiltration of rainwater or the like through applying a primer, which is a type of adhesive, on the concrete slab, applying a sealant, which is a waterproofing agent, on the primer, and paving the sealant with a geogrid having a mesh structure for adhesion and binding with the asphalt has been applied.

The primer serves to adhere and bind the concrete slab and the sealant, which is a waterproofing agent, the sealant serves to block infiltration of rainwater or the like from the asphalt pavement layer toward the concrete slab, and the geogrid serves to integrate the sealant and the asphalt by melting due to a high temperature (about 150 °C) while preventing asphalt paving equipment from coming into contact with the sealant, which is a waterproof layer, upon paving asphalt. Meanwhile, the waterproof coating material has characteristics in that it can be constructed easily due to being in a gel phase, it is capable of completely preventing infiltration of rainwater, moisture, or the like, and it forms a waterproof coating layer with high adhesive power, elasticity, and stretchability with respect to an object to which concrete is applied, thereby maximizing a waterproof effect while having resistance to concrete cracks.

Since the waterproof coating material having the above characteristics has a predetermined viscosity level and is in a gel phase with high adhesiveness, it is generally stored in a container such as a can. That is, since, when the waterproof coating material is stored in a general sack or the like, a worker is unable to supply the waterproof coating material by the same amount at a time to a foundation surface in accordance with an application area and has to pour the waterproof coating material, the waterproof coating material is generally produced by being stored in a container such as a can.

In the method of constructing the waterproof coating material, since uniformly applying the waterproof coating material on the foundation surface is important when applying the waterproof coating material on a waterproof section of a rooftop of a building, a top of a parking lot or the like, conventionally, a construction process has been performed in which the waterproof coating material is uniformly applied using hands or saw-toothed scrapers by a large work force.

In the conventional construction method, since workers have to draw the waterproof coating material from a container such as a can in which the waterproof coating material is stored directly by hand each time and apply the waterproof coating material by a thickness of 2 to 3 mm on a foundation surface by hand or using tools such as saw-toothed scrapers, waterproof construction is extremely cumbersome, and it is not possible to obtain a coating layer of a uniform thickness. Also, since it is not possible to completely remove the waterproof coating material from inside the can and residue of the waterproof coating material is always stuck on an inner wall of the can, there are problems in that it is not possible to use up the waterproof coating material, it is not possible to recycle the storage cans, and environmental pollution is caused due to disposal of the waterproof coating material.

The present invention has been made in view of the above conventional problems, and one aspect of the present invention provides a bridge deck waterproofing apparatus capable of improving work efficiency by significantly reducing a working time by automatically performing a series of application processes including discharging a waterproof coating material for waterproofing a bridge deck, spreading the waterproof coating material, and applying the waterproof coating material in a uniform thickness.

Another aspect of the present invention provides a waterproof coating method using the bridge deck waterproofing apparatus.

Still another aspect of the present invention provides a composition of the waterproof coating material applied by the waterproof coating material applying apparatus.

Yet another aspect of the present invention provides a coating layer including the waterproof coating material.

Aspects of the present invention are not limited to those mentioned above, and other unmentioned aspects should be clearly understood by those of ordinary skill in the art from the description below.

To achieve an aspect, the present invention provides a bridge deck waterproofing apparatus including: a cooker (200) which is installed to be seated on a driving vehicle or a trailer (100), which is installed to be towed behind the driving vehicle, is configured to melt a waterproof coating material (30) in a solid phase into a gel phase and store the gel-phase waterproof coating material (30) therein, and having, at a rear portion thereof, a discharge duct (210) configured to discharge the gel-phase waterproof coating material to a work surface; a pair of support frames (300) supported by hydraulic cylinders (310) so as to be liftable and lowerable in a vertical direction on both sides behind the trailer (100); a spreading unit (400) installed in a vicinity of free ends (311) of the support frames (300) and configured to spread the waterproof coating material (30), which is discharged through the discharge duct (210) of the cooker (200), in left and right directions in accordance with a road width; and a scraper (500) installed at the free ends of the support frames (300), which are behind the spreading unit (400), and configured to scrape the waterproof coating material (30) spread by the spreading unit (400) to apply the waterproof coating material (30) in a uniform thickness.

The scraper (500) may include: a center scraper (510) formed of a center scraper housing (511), which extends in a transverse direction, coupled to rear ends of the pair of support frames (300) and having a transverse length corresponding to a transverse width of the trailer 100 and a center rubber plate (512) coupled to a lower end of the center scraper housing (511) and configured to scrape the waterproof coating material (30); a side scraper (520) formed of a pair of side scraper housings (521) installed to be slidable in a width direction of the center scraper housing (511) on both sides of the center scraper housing (511) and configured to be expanded or reduced in accordance with a road width and side rubber plates (522) coupled to lower ends of the side scraper housings (521) and configured to scrape the waterproof coating material (30) located at an outer side in a width direction of the center rubber plate (512); and a sliding cylinder (530) installed inside the center scraper housing (511) and configured to slide and convey each of the side scraper housings (521) in a direction in which the side scraper housing (521) is expanded or reduced.

The bridge deck waterproofing apparatus may further include a height adjusting unit (600) installed between the center scraper housing (511) and the rear ends of the support frames (300) and configured to adjust a height of the center scraper housing (511), wherein the height adjusting unit (600) may include a lifting-lowering link (610) installed to be liftable and lowerable along vertical slots (301) formed in the support frames (300), a rotatable link (620) bound to the center scraper housing (511) while one end thereof is pin-coupled to the lifting-lowering link (610), a cylinder holder (630) pin-coupled to the other end of the rotatable link (620), and a height adjusting cylinder (640) having a cylinder body (641) mounted on the cylinder holder (630) and a rod (642) pin-coupled to the free ends of the support frames (300) and configured to adjust the height of the center scraper housing (511) according to back and forth movement of the rod (642).

The spreading unit (400) may include a guide frame (410) in a transverse shape that is coupled to sides of the support frames (300) in front of the scraper (500) via a hanger (700), a guide block (420) installed to be movable in left and right directions in a length direction of the guide frame (410), a spreading plate (430) installed at a lower end of the guide block (420) and configured to spread the waterproof coating material (30), which is agglomerated on the ground according to movement of the guide block in the left and right directions, in accordance with a road width, and a moving member (440) configured to move the guide block (420) in the left and right directions, wherein the moving member (440) may include a flat gear (441) installed on a top of the guide frame (410) via an end plate (450) so as to be parallel to the guide frame (410), a driving motor (442) installed to be fixed on the guide block (420), and a driving gear (443) connected to the driving motor (442) to rotate and engaged with the flat gear (441).

The guide frame (410) of the spreading unit (400) may be connected to the support frames (300) via a hanger (700), wherein the hanger (700) may include an upper connecting piece (710) coupled to the support frames (300) and a lower connecting piece (720) coupled to the guide frame (410) and having an upper end bound to the upper connecting piece (710) by a pin while being inserted into the upper connecting piece, and a pin hole (711) in which a plurality of pin binding holes are formed in a vertical direction so that the pin is selectively bound may be formed in the upper connecting piece (710).

To achieve another aspect, the present invention provides a waterproof coating method using the above-described bridge deck waterproofing apparatus, the waterproof coating method including: melting a waterproof coating material (30) in a solid phase stored in a cooker (200), which is seated on a driving vehicle or a trailer (100) installed to be towed behind the driving vehicle, by heating; discharging the molten gel-phase waterproof coating material (30) in the cooker (200) in an agglomerated form onto a primer layer (20), which is applied on a concrete slab, through a discharge duct (210) provided at a rear portion of the cooker (200); spreading the waterproof coating material (30) in the agglomerated form in left and right directions in accordance with a road width by movement of a spreading plate (430), which is an element of a spreading unit (400), in the left and right direction; and, by a scraper (500) provided behind the spreading unit (400), scraping the waterproof coating material (30) spread in accordance with the road width so that the waterproof coating material (30) is applied in a uniform thickness.

To achieve still another aspect, the present invention provides a waterproof coating material applied by the above-described bridge deck waterproofing apparatus, the waterproof coating material including 73 to 76 parts by weight of asphalt, 12 to 14 parts by weight of styrene-based synthetic polymer, 3 to 5 parts by weight of adhesion-enhancing petroleum resin, and 6 to 8 parts by weight of calcium carbonate for inorganic filler.

To achieve yet another aspect, the present invention provides a coating layer including: an adhesive applied on a surface of a concrete slab; the above-described waterproof coating material applied on the concrete slab by the adhesive to prevent infiltration of water; and a grid sheet laminated on the waterproof coating material to serve as a reinforcement that distributes an impact load and having asphalt concrete applied thereon.

The present invention according to the technical solution can automatically perform a series of application processes including discharging a waterproof coating material for waterproofing a bridge deck, spreading the waterproof coating material, and applying the waterproof coating material in a uniform thickness, thereby significantly reducing a working time and significantly improving work efficiency.
- FIG. 1: is an overall perspective view of a bridge deck waterproofing apparatus according to the present invention.
FIG. 2 is a side view of FIG. 1.
FIG. 3 is an enlarged view of a main portion in the side view of FIG. 1.
FIG. 4 is a bottom perspective view of the main portion in FIG. 1.
- FIG. 5: is a view showing a detailed configuration of a scraper according to the present invention and showing a state in which one side scraper is folded.
- FIG. 6: is a flowchart of a waterproof coating method according to the present invention.
- FIG. 7: is a view showing a configuration of a coating layer according to the present invention.

The present invention is not limited to embodiments described herein and may be realized in other forms. The embodiments introduced herein are rather provided to make the disclosure of the present invention thorough and complete and to sufficiently convey the idea of the present invention to those of ordinary skill in the art. Like reference numerals refer to like elements throughout. Terms used herein are for describing the embodiments and are not intended to limit the present invention. In the specification, a singular expression includes a plural expression unless the context clearly indicates otherwise. "Comprises" and/or "comprising" used herein do not preclude the existence or the possibility of adding one or more elements, steps, operations, and/or devices other than those mentioned.

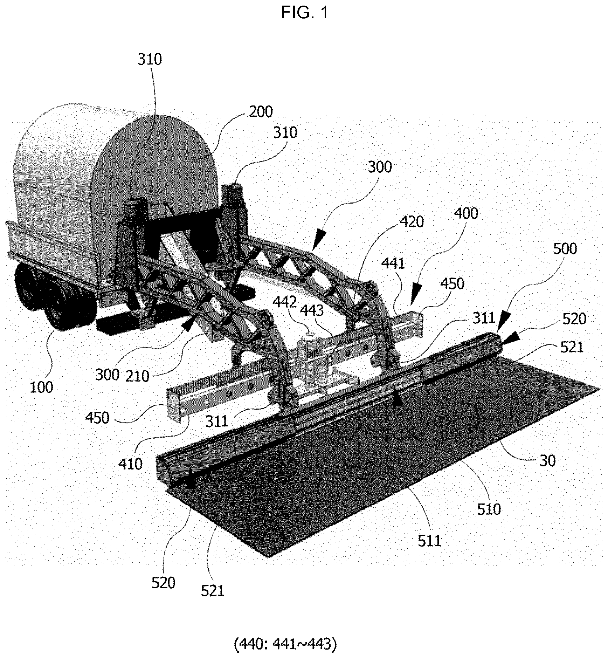

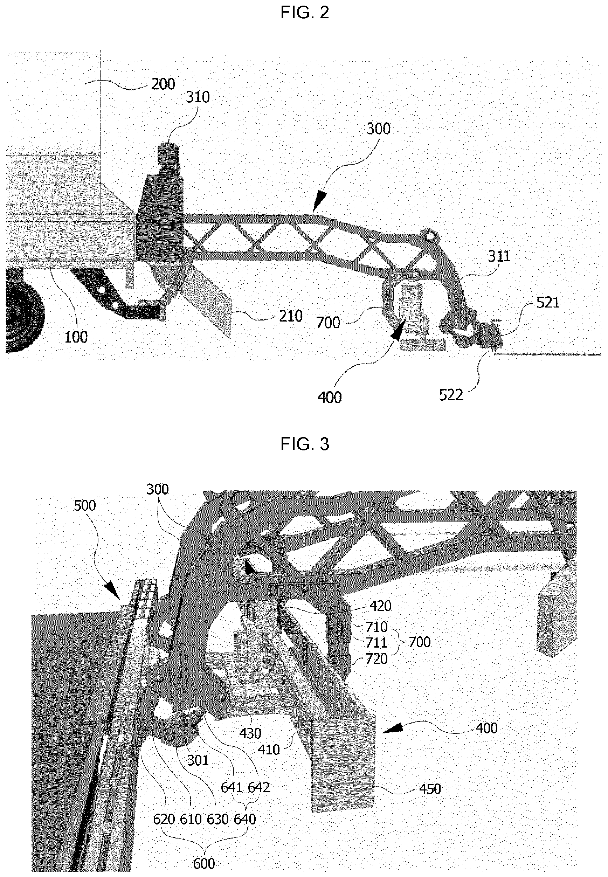

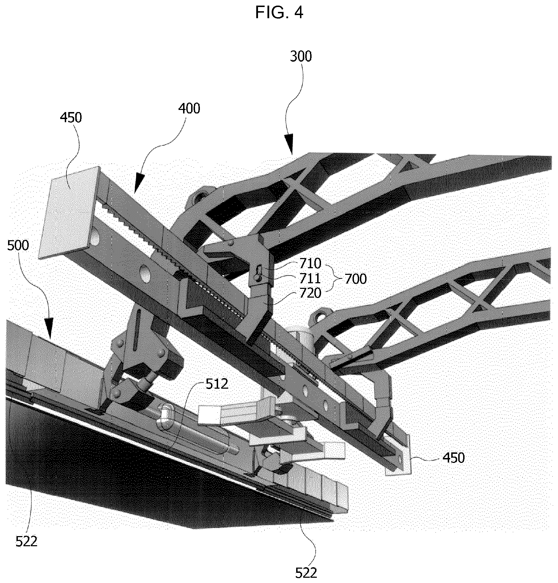

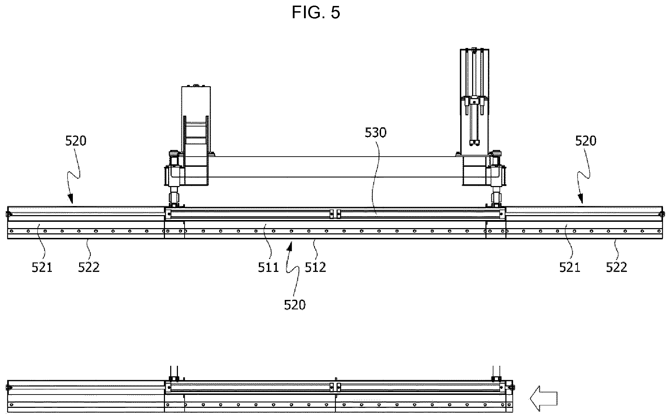

Hereinafter, exemplary embodiments of the present invention will be described in detail with reference to the accompanying drawings. FIG. 1 is an overall perspective view of a bridge deck waterproofing apparatus according to the present invention, FIG. 2 is a side view of FIG. 1, FIG. 3 is an enlarged view of a main portion in the side view of FIG. 1, FIG. 4 is a bottom perspective view of the main portion in FIG. 1, and FIG. 5 is a view showing a detailed configuration of a scraper according to the present invention and showing a state in which one side scraper is folded.

Referring to the drawings, the bridge deck waterproofing apparatus according to the present invention, which is an apparatus for automatically applying a waterproof coating material for waterproofing, includes a cooker 200, support frames 300, a spreading unit 400, and a scraper 500.

The cooker 200 is installed to be seated on a driving vehicle or a trailer 100, which is installed to be towed behind the driving vehicle, and is in the form of a tank configured to melt a waterproof coating material 30 in a solid phase into a gel phase and store the gel-phase waterproof coating material 30 therein. A heater (not illustrated) configured to melt the waterproof coating material 30 may be installed inside the cooker 200.

Also, at a rear portion of the cooker 200, a discharge duct 210 is provided downward from the cooker 200 toward a work surface so as to discharge the gel-phase waterproof coating material to the work surface. Consequently, the waterproof coating material 30 in a molten state filled in the cooker 20 is automatically discharged to the work surface through the discharge duct 210. In this case, a discharge amount adjusting valve (not illustrated) configured to adjust a discharge amount of the waterproof coating material 30 may be installed in the discharge duct 210.

A pair of support frames 300 are provided and are supported to be liftable and lowerable in a vertical direction by hydraulic cylinders 310 on both sides behind the trailer 100. That is, each support frame 300 has one end installed at an installing portion provided at each of the both sides behind the trailer 100 and is in a state of being liftable and lowerable according to driving of the hydraulic cylinders 310 provided at an upper end of the installing portion. Here, since the support frames 300 are supported in the form of a cantilever, the support frames 300 may be in a truss structure to prevent a decrease in the rigidity while reducing the weight.

Also, since free ends 311 of the support frames 300 may be lifted by the hydraulic cylinders 310, when the water coating material applying apparatus is not in use, the free ends of the support frames 300 may be lifted to facilitate movement of the trailer 100.

Further, in the support frames 300, an impact-absorbing spring (not illustrated) may be installed at a bottom of an end fixed to each installing portion in order to absorb an impact during movement. Also, for uniform height adjustment of the free ends 311 with respect to the ground, a distance sensor configured to sense a distance from the ground may be installed in the free ends 311, and a controller (not illustrated) configured to control the hydraulic cylinders 310 so that a uniform distance is maintained between the free ends 311 and the ground by data sensed by the distance sensor may be further provided.

Also, since lifting and lowering of the support frames 300 are separately controlled by each hydraulic cylinder 310, angles of inclination of the spreading unit 400 and the scraper 500 installed at the free ends of the support frames 300 may be changed to be horizontal or gradient according to a working range of each hydraulic cylinder 310. Particularly, this allows flexibly dealing with roads, taking into consideration that roads have a gradient toward the sidewalk for drainage.

The spreading unit 400 is installed in the vicinity of the free ends 311 and serves to spread the waterproof coating material 30, which is discharged through the discharge duct 210 of the cooker 200, in left and right directions in accordance with a road width. That is, since the waterproof coating material 30 discharged through the discharge duct 210 of the cooker at the same one place reaches an agglomerated state, the agglomerated waterproof coating material 30 has to be evenly spread in accordance with the road width. The spreading unit 400 plays such a role.

Here, the spreading unit 400 may include a guide frame 410 in a transverse shape that is coupled to sides of the support frames 300 in front of the scraper 500 via a hanger 700, a guide block 420 installed to be movable in left and right directions in a length direction of the guide frame 410, a spreading plate 430 installed at a lower end of the guide block 420 and configured to spread the waterproof coating material 30, which is agglomerated on the ground, according to movement of the guide block in the left and right directions in accordance with a road width, and a moving member 440 configured to move the guide block 420 in the left and right directions.

The moving member 440 may include a flat gear 441 installed on a top of the guide frame 410 via an end plate 450 so as to be parallel to the guide frame 410, a driving motor 442 installed to be fixed on the guide block 420, and a driving gear 443 connected to the driving motor 442 to rotate and engaged with the flat gear 441.

Consequently, when the driving gear 443 rotates due to the driving motor 442, the driving gear 443 is moved according to the flat gear 441 engaged therewith due to a rotational force of the rotation. At the same time, the guide block 420 at which the driving gear 443 is installed may slide along the guide frame 410, and the spreading plate 430 installed below the guide block 420 is moved together with the driving gear 443. As the spreading plate 430 is moved in the left and right directions, the waterproof coating material 30, which is agglomerated, spreads widely by as much as a road width.

Meanwhile, the guide frame 410 of the spreading unit 400 is connected to the support frames 300 via the hanger 700. Here, the hanger 700 may include an upper connecting piece 710 coupled to the support frames 300 and a lower connecting piece 720 coupled to the guide frame 410 and having an upper end bound to the upper connecting piece 710 by a pin while being inserted into the upper connecting piece.

A pin hole 711 in which a plurality of pin binding holes are formed in a vertical direction so that the pin is selectively bound is provided in the upper connecting piece 710.

Also, by coupling the lower connecting piece 720 to the guide frame 410, a height of the spreading unit 400 connected to the lower connecting piece 720 may also be adjusted when a degree to which the lower connecting piece 720 is inserted into the upper connecting piece 710 is adjusted.

The scraper 500 is installed at the free ends of the support frames 300, which are behind the spreading unit 400 and serves to scrape the waterproof coating material 30 spread by the spreading unit 400 to apply the waterproof coating material 30 in a uniform thickness.

The scraper 500 includes a center scraper 510, a side scraper 520, and a sliding cylinder 530.

The center scraper 510 may be formed of a center scraper housing 511, which extends in a transverse direction, coupled to rear ends of the pair of support frames 300 and having a transverse length corresponding to a transverse width of the trailer 100 and a center rubber plate 512 coupled to a lower end of the center scraper housing 511 and configured to scrape the waterproof coating material 30.

The side scraper 520 may be formed of a pair of side scraper housings 521 installed to be slidable in a width direction of the center scraper housing 511 on both sides of the center scraper housing 511 and configured to be expanded or reduced in accordance with a road width and a center rubber plate 512 coupled to lower ends of the side scraper housings 521 and configured to scrape the waterproof coating material 30 located at an outer side in a width direction of the center rubber plate 512.

The sliding cylinder 530 is installed inside the center scraper housing 511 and serves to slide and convey each of the side scraper housings 521 in a direction in which the side scraper housing 521 is expanded or reduced.

Meanwhile, a height adjusting unit 600 configured to adjust a height of the center scraper housing 511 may be installed between the center scraper housing 511 and the rear ends of the support frames 300.

Here, the height adjusting unit 600 may include a lifting-lowering link 610 installed to be liftable and lowerable along vertical slots 301 formed in the support frames 300, a rotatable link 620 bound to the center scraper housing 511 while one end thereof is pin-coupled to the lifting-lowering link 610, a cylinder holder 630 pin-coupled to the other end of the rotatable link 620, and a height adjusting cylinder 640 having a cylinder body 641 mounted on the cylinder holder 630 and a rod 642 pin-coupled to the free ends of the support frames 300 and configured to adjust the height of the center scraper housing 511 according to back and forth movement of the rod 642.

The bridge deck waterproofing apparatus according to the present invention having the above-described configuration is capable of uniformly applying the waterproof coating material 30 automatically, without a worker, thereby significantly reducing a working time and improving work efficiency.

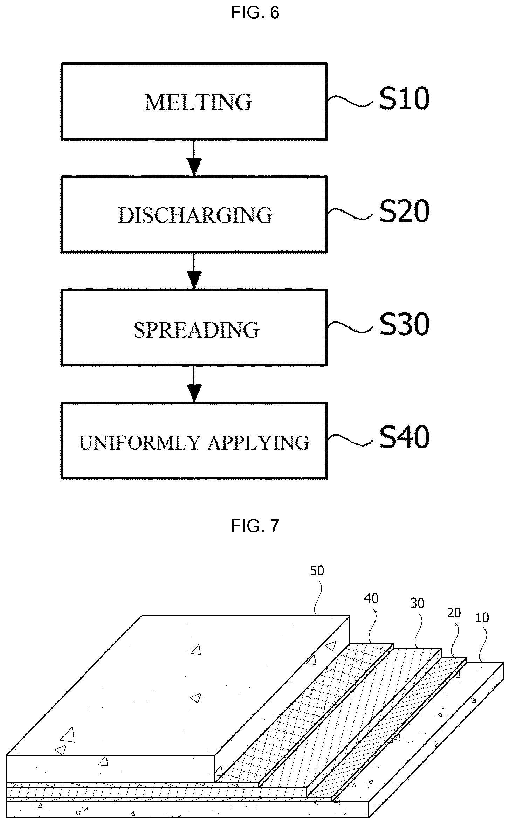

Meanwhile, a waterproof coating method using the above-described bridge deck waterproofing apparatus is performed as follows (see FIG. 6).

As a first operation, the waterproof coating material 30 in a solid phase stored in the cooker 200, which is seated on the driving vehicle or the trailer 100 installed to be towed behind the driving vehicle, is melted by heating (S10). This may be performed by installing a heater in the trailer 100 itself. A temperature sensor (not illustrated) may be installed to maintain a uniform heating temperature.

As a second operation, the molten gel-phase waterproof coating material 30 in the cooker 200 is discharged in an agglomerated form on to a primer layer 20, which is applied on a concrete slab, through the discharge duct 210 provided at the rear portion of the cooker 200. Here, since the discharge duct 210 of the cooker 200 is installed at only one place, the waterproof coating material 30 discharged through the discharge duct 210 is discharged in an agglomerated linear form.

As a third operation, the waterproof coating material 30 in the agglomerated form is spread in the left and right directions in accordance with a road width by movement of the spreading plate 430, which is an element of the spreading unit 400, in the left and right direction (S30). Here, the spreading plate 430 is repeatedly conveyed in the left and right directions in accordance with a road width input in advance to a controller (not illustrated), thereby spreading the waterproof coating material 30, which has been discharged in the agglomerated linear form, in accordance with the road width.

As a fourth operation, by the scraper 500 provided behind the spreading unit 400, the waterproof coating material 30, which has been spread in accordance with the road width, is scraped so that the waterproof coating material 30 is applied in a uniform thickness (S40). Since an application thickness of the waterproof coating material 30 spread by the spreading unit 400 is irregular, the waterproof coating material 30 is scraped by the center rubber plate 512 and the side rubber plates 522 of the scraper 500, which maintain a uniform height from the ground, thereby allowing the waterproof coating material 30 to be applied in a uniform thickness.

Meanwhile, the waterproof coating material 30 applied by the bridge deck waterproofing apparatus according to the present invention may include 73 to 76 parts by weight of asphalt, 12 to 14 parts by weight of styrene-based synthetic polymer, 3 to 5 parts by weight of adhesion-enhancing petroleum resin, and 6 to 8 parts by weight of calcium carbonate for inorganic filler.

Here, the styrene-based synthetic polymer may consist of 50 to 99.5 parts by weight of styrene, 0 to 30 parts by weight of a styrene-based derivative, and 0.5 to 20 parts by weight of a vinyl-based compound capable of copolymerizing with the styrene.

Any one selected from the group consisting of o-methylstyrene, p-methylstyrene, t-butylstyrene, α-methylstyrene, and Bromostyrene may be used as the styrene-based derivative. More desirably, α-methylstyrene may be used. Although α-methylstyrene is described in detail in an embodiment of the present invention, the styrene-based derivative is not limited thereto. Here, it is desirable that the styrene-based derivative be contained by 0 to 30 parts by weight. When the content of the styrene-based derivative exceeds 30 parts by weight, polymerization reactivity with the styrene significantly decreases such that the reaction progresses extremely slowly, and a molecular weight sharply decreases such that mechanical properties are degraded.

A process of producing the above-described styrene-based synthetic polymer may include: a) mixing 0 to 20 parts by weight of an organic solvent to 100 parts by weight of a monomer composition consisting of 50 to 99.5 parts by weight of styrene, 0 to 30 parts by weight of a styrene-based derivative, and 0.5 to 20 parts by weight of a vinyl-based compound capable of polymerizing with the styrene and putting the mixture into a reactor connected in series, b) upon a bulk polymerization reaction, adjusting the reaction by 50 to 1,000 ppm of a multifunctional response regulator so that 50% to 70% of the monomer in the reactor is converted to polymer; and c) volatilizing an unreacted monomer and the solvent and separating the polymer from a reaction solution obtained in the previous operation.

The adhesion-enhancing petroleum resin has a weakened odor due to polymerization between a portion of dicyclopentadiene with high odor and olefin having a carbon number of 6 to 20. The adhesion-enhancing petroleum resin has a structure in which cyclopentadiene, in which a double bond is not left due to going through a hydrogen adding reaction, and olefin having a carbon number of 6 to 20 are polymerized. Also, the petroleum resin of the present invention may improve adhesive and agglomeration performance by increasing compatibility with various polymers by copolymerizing diolefin and olefin.

The adhesion-enhancing petroleum resin may have a weight-average molecular weight in a range of 500 to 3,000 g/mol, a softening point in a range of 10 to 150 °C, and American Public Health Association (APHA) color in a range of 1 to 100. The adhesive power may decrease when the weight-average molecular weight is less than 500 g/mol, and compatibility may be insufficient when the weight-average molecular weight exceeds 3,000 g/mol. The adhesive power may decrease when the softening point is lower than 10 °C, and application to a production process may be difficult when the softening point exceeds 150 °C. Thus, such softening points are not desirable.

Meanwhile, the present invention provides a coating layer including the above-described waterproof coating material 30 (see FIG. 7).

The coating layer according to the present invention is constructed between a concrete slab 10 constituting an upper plate of a bridge and asphalt concrete 50, which is a pavement layer. That is, the primer layer 20 is applied on the concrete slab 10, the waterproof coating material 30 and the grid sheet 40 are laminated on the primer layer 20, and the asphalt concrete 50 is constructed at last.

Regarding the waterproof coating material 30, even a slight amount of residual moisture on a surface of an adhesive layer may cause inflation (generation of air pockets) on a waterproof layer. Thus, cleaning should be performed to ensure that the surface of the adhesive layer is completely dried and to remove dust, mud, and other harmful substances from the surface of the adhesive layer. After the cleaning is finished, a primer is applied to form the primer layer 20. The primer is a type of adhesive for facilitating adhesion of the waterproof layer to an upper portion of the concrete slab 10.

The waterproof coating material 30 having the above-described components is applied on the primer layer 20. The waterproof coating material 30 reaches a state in which it is reliably in contact with the concrete slab 10 therebelow by the primer layer 20.

The grid sheet 40 laminated on the waterproof coating material 30 is for significantly increasing a tensile strength of the waterproof coating material 30. Glass fibers are used for the grid sheet 40. Since the grid sheet formed of glass fibers has a characteristic in that heat resistance, corrosion resistance, and moisture resistance are high, and the glass fibers have a higher tensile strength, has a higher flexibility, is less likely to be ruptured due to an external impact, and is less prone to change due to heat and moisture as a diameter of the glass fibers become smaller, a phenomenon in which the pavement layer is pushed due to a wheel load of a large vehicle or a rupture of the waterproof layer caused by irregularities may be suppressed.

Meanwhile, the sheet 40 according to the present invention has a tear strength in a range of 75 to 95 N in a length direction and a tear strength in a range of 105 to 125 N in a width direction.

When the tear strength is less than 75 N in the length direction or less than 105 N in the width direction, a problem occurs in that the sheet 40 is too easily torn due to an external force. When the tear strength exceeds 95 N in the length direction or exceeds 125 N in the width direction, a problem occurs in that a production cost is significantly increased by as much as an improvement in the tear strength.

Consequently, it is desirable that the sheet 40 according to the present invention has the tear strength in the range of 75 to 95 N in the length direction and the tear strength in the range of 105 to 125 N in the width direction.

Also, the sheet 40 according to the present invention has a tensile strength in a range of 24 to 32 N/mm in the length direction when an atmospheric temperature is 60 °C and a tensile strength in a range of 20 to 28 N/mm in the width direction when the atmospheric temperature is 60 °C.

A reason for measuring the tensile strength of the sheet 40 while the atmospheric temperature is set to 60 °C is due to taking into consideration the atmospheric heat and radiant heat on the hottest days of summer.

When the tensile strength is less than 24 N/mm in the length direction when the atmospheric temperature is 60 °C or the tensile strength is less than 20 N/mm in the width direction when the atmospheric temperature is 60 °C, problems occur in that the sheet 40 is excessively stretched due to external heat, and the sheet 40 wrinkles when a vulnerable portion is generated in the sheet 40.

When the tensile strength exceeds 32 N/mm in the length direction when the atmospheric temperature is 60 °C or the tensile strength exceeds 28 N/mm in the width direction when the atmospheric temperature is 60 °C, although excessive stretching of the sheet 40 due to external heat is prevented, the sheet 40 becomes unnecessarily thick, and accordingly, problems occur in that transportability is degraded and the cost of the product significantly increases.

Consequently, it is desirable that the sheet 40 of the present invention has a tensile strength in the range of 24 to 32 N/mm in the length direction when the atmospheric temperature is 60 °C and has a tensile strength in the range of 20 to 28 N/mm in the width direction when the atmospheric temperature is 60 °C.

Also, the sheet 40 according to the present invention has an elongation in a range of 30 to 34% in the length direction when the atmospheric temperature is -20 °C and an elongation in a range of 44 to 48% in the width direction when the atmospheric temperature is -20 °C.

A reason for measuring the elongation of the sheet 40 while the atmospheric temperature is set to -20 °C is due to taking into consideration the atmospheric heat and conductive heat on the coldest days of winter.

When the elongation is less than 30% the length direction when the atmospheric temperature is -20 °C or the elongation is less than 44% in the width direction when the atmospheric temperature is -20 °C, a problem occurs in that the sheet 40 is easily broken due to an external impact.

When the elongation exceeds 34% in the length direction when the atmospheric temperature is -20 °C or the elongation exceeds 48% in the width direction when the atmospheric temperature is -20 °C, a problem occurs in that a vulnerable portion of the sheet 40 is easily torn depending on a degree of contraction.

Consequently, it is desirable that the sheet 40 of the present invention has an elongation in the range of 30 to 34% in the length direction when the atmospheric temperature is -20 °C and has an elongation in the range of 44 to 48% in the width direction when the atmospheric temperature is -20 °C.

Also, to effectively achieve attachment prevention and removal of contaminants, a contamination-preventing coating layer on which a contamination-preventing coating composition is applied may be formed in the distance sensor. The contamination-preventing coating composition includes hydrogen peroxide and sodium metasilicate in a molar ratio in a range of 1:0.01 to 1:2, and the total content of hydrogen peroxide and sodium metasilicate is in a range of 1 to 10 parts by weight with respect to the total aqueous solution. In addition, although sodium metasilicate or calcium carbonate may be used as a substance for enhancing applicability of the contamination-preventing coating layer, it is desirable that sodium metasilicate be used. Since it is desirable that the molar ratio between hydrogen peroxide and sodium metasilicate be in the range of 1:0.01 to 1:2, when the molar ratio deviates from the range, there is a problem in that applicability of a base material is degraded or moisture adsorption from a surface after application is increased such that an application membrane is removed.

Since it is desirable that the content of hydrogen peroxide and sodium metasilicate be in the range of 1 to 10 parts by weight with respect to the total composition aqueous solution, there is problem in that applicability of a base material is degraded when the content is less than 1 part by weight, and crystal precipitation due to an increase in a thickness of an application membrane is prone to occur when the content exceeds 10 parts by weight.

It is desirable that applying by spraying be used as a method of applying the contamination-preventing coating composition on the base material. Also, a final thickness of the application membrane on the distance sensor is desirably in a range of 500 to 2000 Å and, more preferably, in a range of 1,000 to 2,000 Å. When the thickness of the application membrane is less than 500 Å, there is a problem in that deterioration occurs during a high-temperature heat treatment. When the thickness of the application membrane exceeds 2,000 Å, there is a disadvantage in that crystal precipitation is prone to occur on an application surface.

Also, the contamination-preventing coating composition may be produced by adding 0.1 mol of hydrogen peroxide and 0.05 mol of sodium metasilicate in 1,000 ml of distilled water and then stirring.

Also, the center rubber plate 512 and the side rubber plates 522 may be formed of a rubber material, and the center rubber plate 512 and the side rubber plates 522 formed of a rubber material may have a raw material content ratio in which 60 parts by weight of rubber, 33 to 36 parts by weight of carbon black, 2 to 5 parts by weight of antioxidant, and 1 to 3 parts by weight of sulfur, which is a catalyst are mixed.

Carbon black is added to improve wear resistance. However, since elasticity and wear resistance may be decreased when the content of carbon black is less than 33 parts by weight, and the content of rubber, which is a main component, is relatively decreased and elasticity may be decreased when the content of carbon black exceeds 36 parts by weight, 33 to 36 parts by weight of carbon black is mixed.

3c(n-phenyl-n'-isopropyl-p-phenylenediamine) or rd(polymerized 2,2,4-trimethyl-1,2-dihydroquinoline) is selected as the antioxidant, and 2 to 5 parts by weight thereof is added. Since the product is prone to oxidation when the content of the antioxidant is less than 2 parts by weight, the content of rubber, which is a main component, is relatively decreased and elasticity may be decreased when the content of the oxidant is excessive, i.e., exceeds 5 parts by weight, and the antioxidant is expensive, 2 to 5 parts by weight of the antioxidant is reasonable.

1 to 3 parts by weight of sulfur, which is a catalyst, is mixed. Since less than 1 part by weight of sulfur is insignificant in terms of a vulcanization effect in a heating process upon molding, 1 part by weight or more of sulfur is added. Since the content of rubber, which is a main component, is relatively decreased and elasticity may be decreased when the content of sulfur exceeds 3 parts by weight, 1 to 3 parts by weight of sulfur is reasonable.

Consequently, in the present invention, since the center rubber plate 512 and the side rubber plates 522 are reinforced using synthetic rubber having elasticity in various directions, elasticity, toughness, and rigidity of a first electric belt 93 are enhanced and durability thereof is improved. Accordingly, the service life of the center rubber plate 512 and the side rubber plates 522 is extended.

Also, the flat gear 441 may be formed of a metal material. A corrosion-preventing coating layer formed of a coating composition for preventing corrosion and improving contamination resistance may be applied on the flat gear 441 formed of a metal material.

The coating composition is formed by adding 1.25 to 12.5 parts by weight of hexamethylated-hexamethylol melamine to a water-soluble resin composition produced by mixing 100 parts by weight of resorcinol diglycidyl ether and 25 parts by weight of propanol amine.

In the present invention, a more environmentally-friendly coating for preventing corrosion of the flat gear 441 may be formed by utilizing characteristics such as excellent chemical resistance and dimensional stability of resorcinol diglycidyl ether, characteristics such as corrosion resistance of propanol amine, and characteristics such as excellent lubricity of the melamine derivative.

In a method of applying the corrosion-preventing coating composition, it is desirable that a dry coating is applied with a thickness in a range of 10 to 30 µm on a surface of the flat gear 441.

When the thickness of the dry coating is less than 10 µm, the service life of the flat gear may be decreased. When the thickness of the dry coating exceeds 30 µm, there is no functional problem, but economic feasibility is decreased.

Also, it is possible to obtain a non-adhesive coating with excellent luster by air-drying the flat gear 441, on which the corrosion-preventing coating composition is applied, for 10 to 30 minutes and then hardening the flat gear 441 for 10 to 50 minutes at a temperature in a range of 100 to 200 °C, more desirably, 150 to 180 °C.

Also, a surface-protecting coating layer formed of a metallic surface application material may be formed on the spreading plate 430 in order to prevent surface corrosion due to dust, contaminants, or the like. The surface-protecting coating layer consists of 2.5 parts by weight of zirconium powder, 60 parts by weight of alumina powder, 30 parts by weight of NH₄Cl, 2.5 parts by weight of zinc, 2.5 parts by weight of magnesium, and 2.5 parts by weight of titanium.

The zirconium powder has excellent corrosion resistance and heat resistance. 2.5 parts by weight of the zirconium powder is mixed. When a mixing ratio of the zirconium powder is less than 2.5 parts by weight, corrosion resistance and heat resistance are not significantly improved. On the other hand, when the mixing ratio of the zirconium powder exceeds 2.5 parts by weight, while the above-mentioned effects are not improved further, the material cost significantly increases. Consequently, it is desirable to mix 2.5 parts by weight of zirconium.

The alumina powder is added for a purpose of preventing sintering, tangling, welding or the like. When less than 60 parts by weight of the alumina powder is added, the effects of preventing sintering, tangling, and welding are degraded. When the content of the alumina powder exceeds 60 parts by weight, while the above-mentioned effects are not improved further, the material cost significantly increases. Consequently, it is desirable to add 60 parts by weight of the aluminum powder.

NH₄Cl serves to react with vaporized zinc and magnesium and activate spreading and infiltration. 30 parts by weight of NH₄Cl is added. When less than 30 parts by weight of NH₄Cl is added, a reaction with vaporized zinc and magnesium does not occur properly, and thus it is unable to activate spreading and infiltration. On the other hand, when the content of NH₄Cl exceeds 30 parts by weight, while the above-mentioned effects are not improved further, the material cost significantly increases. Consequently, it is desirable to add 30 parts by weight of NH₄Cl.

The zinc is mixed to prevent corrosion of a metal coming into contact with water and to be used for a purpose of electrolytic protection. 2.5 parts by weight of zinc is mixed. When a mixing ratio of zinc exceeds 2.5 parts by weight, corrosion of a metal coming into contact with water is unable to be prevented properly. On the other hand, when the mixing ratio of zinc exceeds 2.5 parts by weight, while the above-mentioned effects are not improved further, the material cost significantly increases. Consequently, it is desirable to mix 2.5 parts by weight of zinc.

Since a pure magnesium metal has a low structural strength, the magnesium is mixed in combination with the zinc or the like for a purpose of improving hardness, tensile strength, and resistance to corrosion caused by saline water of a metal. 2.5 parts by weight of magnesium is mixed. When a mixing ratio of magnesium is less than 2.5 parts by weight, the hardness, tensile strength, and resistance to corrosion caused by saline water of a metal are not improved significantly upon combination with zinc or the like. On the other hand, when the mixing ratio of magnesium exceeds 2.5 parts by weight, while the above-mentioned effects are not improved further, the material cost significantly increases. Consequently, it is desirable to mix 2.5 parts by weight of magnesium.

Titanium is a transition metal element which is light, hard, and corrosion-resistant and has a light silvery luster. Thus, since titanium has excellent corrosion resistance and low specific gravity, a weight of titanium with respect to steel is only 60%. Therefore, titanium is mixed to increase luster and have excellent waterproofness and corrosion resistance while decreasing a weight of an application material applied on a parent metal.

2.5 parts by weight of titanium is mixed. When a mixing ratio of titanium is less than 2.5 parts by weight, the weight of the application material applied to the parent metal is not quite decreased, and luster, waterproofness, and corrosion resistance are not improved significantly. On the other hand, when the mixing ratio of titanium exceeds 2.5 parts by weight, while the above-mentioned effects are not improved further, the material cost significantly increases. Consequently, it is desirable to mix 2.5 parts by weight of titanium.

A method of applying a material on a surface of the spreading plate 430 according to the present invention is as follows.

The spreading plate 430, on which a surface-protecting coating layer should be formed, and an application material formed by the above-described mixture are put into a closed furnace together, and argon gas in a flow rate of 2L/min is injected into the closed furnace in order to prevent oxidation of the spreading plate 430. In a state in which the argon gas is injected, the closed furnace is maintained at a temperature in a range of 700 °C to 800 °C for 4 to 5 hours.

By performing the above operation, zirconium powder, alumina powder, zinc, magnesium, and titanium which are in a vaporized state are formed inside the closed furnace, and a mixture of the zirconium powder, alumina powder, zinc, magnesium, and titanium infiltrates through a surface of the spreading plate 430 such that a surface-protecting coating layer is formed.

After the surface-protecting coating layer is formed, when the temperature inside the closed furnace is set so that a composite of the applied substance and the base material is maintained at a temperature in a range of 800 °C to 900 °C for 30 to 40 hours, a corrosion-preventing surface-protecting coating layer is formed on the surface of the spreading plate 430, and the surface of the spreading plate 430 is isolated from outside air. Here, in performing the above process, since a sharp temperature change may cause the surface-protecting coating layer on the surface of the spreading plate 430 to be delaminated, the temperature is changed at a rate of 60 °C per hour.

The surface-protecting coating layer according to the present invention has the following advantages.

The surface-protecting coating layer according to the present invention is for an extremely wide range of uses. Thus, the surface-protecting coating layer may be applied using various methods such as curtain coating, spray painting, dip coating, and flooding.

In addition to fundamentally protecting a surface from corrosion and/or protecting a scale of the surface, the surface-protecting coating layer according to the present invention may be applied in a very small layer thickness. Thus, it is possible to improve electrical conductivity and reduce the amount of substances and cost. Even after a hot forming process, a thin conductive primer may be applied on the coating layer if high electrical conductivity is desirable.

The applied substance may be maintained on a surface of a base material after a molding process or a hot forming process. For example, it is possible to provide a primer capable of increasing scratch resistance, protecting corrosion better, satisfying aesthetic sense, preventing discoloration, changing electrical conductivity, and being used in a conventional downstream process (e.g., phosphatizing and electrophoretic dip coating).

Since the surface-protecting coating layer formed of zirconium powder, alumina powder, NH₄Cl, zinc, magnesium, and titanium is applied on the spreading plate 430 according to the present invention, it is possible to prevent corrosion of the surface of the spreading plate 430 due to dust, contaminants, or the like.

The present invention has been described in detail through specific embodiments. However, the embodiments are merely for describing the present invention in detail, and the present invention is not limited thereto. It is apparent that modifications or changes may be made by those of ordinary skill in the art within the technical idea of the present invention.

Simple modifications or changes of the present invention all belong to the scope of the present invention. A specific scope of the present invention will become apparent by the attached claims below.

## Claims

1. A bridge deck waterproofing apparatus comprising:
a cooker (200) which is installed to be seated on a driving vehicle or a trailer (100), which is installed to be towed behind the driving vehicle, is configured to melt a waterproof coating material (30) in a solid phase into a gel phase and store the gel-phase waterproof coating material (30) therein, and having, at a rear portion thereof, a discharge duct (210) configured to discharge the gel-phase waterproof coating material to a work surface;
a pair of support frames (300) supported by hydraulic cylinders (310) so as to be liftable and lowerable in a vertical direction on both sides behind the trailer (100);
a spreading unit (400) installed in a vicinity of free ends (311) of the support frames (300) and configured to spread the waterproof coating material (30), which is discharged through the discharge duct (210) of the cooker (200), in left and right directions in accordance with a road width; and
a scraper (500) installed at the free ends of the support frames (300), which are behind the spreading unit (400), and configured to scrape the waterproof coating material (30) spread by the spreading unit (400) to apply the waterproof coating material (30) in a uniform thickness.

2. The bridge deck waterproofing apparatus of claim 1, wherein the scraper (500) includes:
a center scraper (510) formed of a center scraper housing (511), which extends in a transverse direction, coupled to rear ends of the pair of support frames (300) and having a transverse length corresponding to a transverse width of the trailer 100 and a center rubber plate (512) coupled to a lower end of the center scraper housing (511) and configured to scrape the waterproof coating material (30);
a side scraper (520) formed of a pair of side scraper housings (521) installed to be slidable in a width direction of the center scraper housing (511) on both sides of the center scraper housing (511) and configured to be expanded or reduced in accordance with a road width and side rubber plates (522) coupled to lower ends of the side scraper housings (521) and configured to scrape the waterproof coating material (30) located at an outer side in a width direction of the center rubber plate (512); and
a sliding cylinder (530) installed inside the center scraper housing (511) and configured to slide and convey each of the side scraper housings (521) in a direction in which the side scraper housing (521) is expanded or reduced.

3. The bridge deck waterproofing apparatus of claim 2, further comprising a height adjusting unit (600) installed between the center scraper housing (511) and the rear ends of the support frames (300) and configured to adjust a height of the center scraper housing (511), wherein the height adjusting unit (600) includes:
a lifting-lowering link (610) installed to be liftable and lowerable along vertical slots (301) formed in the support frames (300);
a rotatable link (620) bound to the center scraper housing (511) while one end thereof is pin-coupled to the lifting-lowering link (610);
a cylinder holder (630) pin-coupled to the other end of the rotatable link (620); and
a height adjusting cylinder (640) having a cylinder body (641) mounted on the cylinder holder (630) and a rod (642) pin-coupled to the free ends of the support frames (300) and configured to adjust the height of the center scraper housing (511) according to back and forth movement of the rod (642).

4. The bridge deck waterproofing apparatus of one of the preceding claims, wherein the spreading unit (400) includes:
a guide frame (410) in a transverse shape that is coupled to sides of the support frames (300) in front of the scraper (500) via a hanger (700);
a guide block (420) installed to be movable in left and right directions in a length direction of the guide frame (410);
a spreading plate (430) installed at a lower end of the guide block (420) and configured to spread the waterproof coating material (30), which is agglomerated on the ground according to movement of the guide block in the left and right directions, in accordance with a road width; and
a moving member (440) configured to move the guide block (420) in the left and right directions,
wherein the moving member (440) may include a flat gear (441) installed on a top of the guide frame (410) via an end plate (450) so as to be parallel to the guide frame (410), a driving motor (442) installed to be fixed on the guide block (420),
and a driving gear (443) connected to the driving motor (442) to rotate and engaged with the flat gear (441),
the guide frame (410) of the spreading unit (400) is connected to the support frames (300) via a hanger (700), wherein the hanger (700) includes an upper connecting piece (710) coupled to the support frames (300) and a lower connecting piece (720) coupled to the guide frame (410) and having an upper end bound to the upper connecting piece (710) by a pin while being inserted into the upper connecting piece, and a pin hole (711) in which a plurality of pin binding holes are formed in a vertical direction so that the pin is selectively bound is formed in the upper connecting piece (710).

5. A waterproof coating method using the bridge deck waterproofing apparatus of claims 1 to 4, the waterproof coating method comprising:
melting a waterproof coating material (30) in a solid phase stored in a cooker (200), which is seated on a driving vehicle or a trailer (100) installed to be towed behind the driving vehicle, by heating;
discharging the molten gel-phase waterproof coating material (30) in the cooker (200) in an agglomerated form onto a primer layer (20), which is applied on a concrete slab, through a discharge duct (210) provided at a rear portion of the cooker (200);
spreading the waterproof coating material (30) in the agglomerated form in left and right directions in accordance with a road width by movement of a spreading plate (430), which is an element of a spreading unit (400), in the left and right direction; and
by a scraper (500) provided behind the spreading unit (400), scraping the waterproof coating material (30) spread in accordance with the road width so that the waterproof coating material (30) is applied in a uniform thickness.

6. A waterproof coating material applied by the bridge deck waterproofing apparatus of any one of claims 1 to 4, the waterproof coating material comprising 73 to 76 parts by weight of asphalt, 12 to 14 parts by weight of styrene-based synthetic polymer, 3 to 5 parts by weight of adhesion-enhancing petroleum resin, and 6 to 8 parts by weight of calcium carbonate for inorganic filler.

7. A coating layer comprising:
an adhesive applied on a surface of a concrete slab;
the waterproof coating material of claim 6 that is applied on the concrete slab by the adhesive to prevent infiltration of water; and
a grid sheet laminated on the waterproof coating material to serve as a reinforcement that distributes an impact load and having asphalt concrete applied thereon.
